# EUROPEAN PATENT SPECIFICATION

(11) **EP 2 591 618 B1**
(45) Date of publication and mention of the grant of the patent: **08.05.2019**
(21) Application number: 11733913.5
(22) Date of filing: 06.07.2011
(51) Int. Cl.: H04L 12/58, H04W 4/14, H04L 29/08

(54) **A MESSAGE ROUTER FOR CONCATENATED SMS**
NACHRICHTENROUTER FÜR VERKETTETE SMS
ROUTEUR DE MESSAGES POUR SMS CONCATÉNÉS

(30) Priority: 08.07.2010 US 344371 P
(43) Date of publication of application: 15.05.2013
(73) Proprietor: Markport Limited, Dublin 4 (IE)
(72) Inventor: WIJBRANS, Klaas, NL-5121 MV Rijen (NL); VERMOOLEN, Thijs, NL-3705 EH Zeist (NL); VAN DE MOESDIJK, Boudewijn, NL-8219 AB Lelystad (NL); HAVEL, Petr, 66491 Ivan ice (CZ)
(74) Representative: O'Brien, John Augustine
(86) International application number: PCT/IE2011/000035
(87) International publication number: WO 2012/004780

(56) References cited:
- WO-A1-2008/093311
- "3rd Generation Partnership Project; Technical Specification Group Core Network and Terminals; Study into routeing of MT-SMs via the HPLMN (Release 7)", 3GPP STANDARD; 3GPP TR 23.840, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V7.1.0, 1 March 2007 (2007-03-01), pages 1-22, XP050363956,
- "3rd Generation Partnership Project; Technical Specification Group Core Network and Terminals; Service level interworking for Messaging Services (Release 10)", 3GPP STANDARD; 3GPP TS 29.311, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 18 June 2010 (2010-06-18), pages 1-46, XP050441931,
- "3rd Generation Partnership Project; Technical Specification Group Services and System Aspects; Support of Short Message Service (SMS) over generic 3GPP Internet Protocol (IP) access; Stage 2 (Release 10)", 3GPP STANDARD; 3GPP TS 23.204, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.1.0, 10 June 2010 (2010-06-10), pages 1-53, XP050441554, cited in the application
- "3rd Generation Partnership Project; Technical Specification Group Core Network and Terminals; Technical realization of the Short Message Service (SMS) (Release 9)", 3GPP STANDARD; 3GPP TS 23.040, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 31 March 2010 (2010-03-31), pages 1-202, XP050402170, cited in the application

## Description

### INTRODUCTION

### Field of the Invention

The invention relates to processing of messages such as SMS messages.

### Prior Art Discussion

Control of SMS messages being sent and/or received allows operators to apply additional services to them. These services can have different ways of impacting the message, such as:
- no impact, e.g. creating a message copy
- message modification, e.g. inserting an advertisement into the message or forwarding a message and inserting a forwarding indication
- message blocking, e.g. content control (keyword filtering)

A feature in 3GPP 23.040 allows mobile handsets to divide a long text message into multiple segments, and pass each segment as an individual SMS message into the mobile network. Only the receiving mobile handset is expected to collect all segments, and present them as a single message to the mobile recipient. 3GPP TR 23.840 V7.1.0 discloses concatenation of short messages.

Within the operator's mobile network, this handling of multiple segments as an individual message can conflict with the goal of controlling the complete message in order to apply a service.

Currently SMS routers are used in practice to off-load SMSCs or to intercept SMS messages to allow for the creation of additional services. Due to the nature of SMS standardization, these SMS routers are not able to transparently handle concatenated messages when service needs to be applied. All elements of the concatenated message are first retrieved and stored temporarily to be able to apply the appropriate service(s) on the complete message.

As a result, billing information and delivery reports are no longer correctly reflected to the originating handset or SMSC. No way to properly handle concatenated messages in a transparent manner was defined in standardization, and as a result even a newer standard like the IP-SM-GW now explicitly describes the non-transparent handling (TS23.204 section 6.9).

Main problems with this non-transparency include:
- Billing between operators is based on the actual delivery outcome. By introducing non-transparency, the billing for the originating operator is no longer based on the actual delivery of the MT-FSM message. Moreover applying a non-transparent MT delivery behaviour breaks legislation for some European countries that requires that billing is applied for SMS throughout service when the message is actually delivered.
- In many countries there are legal requirements that require a reliable indication (SMS notification) to the originator whether the SMS was actually delivered. Non-transparent behaviour breaks the possibility to commit to this legal requirement.

Due to non-transparency, it will either be very difficult (requiring changes to the operator inter-billing environments) or even not be possible (violation of the law) for operators to introduce advanced services in the MT path.

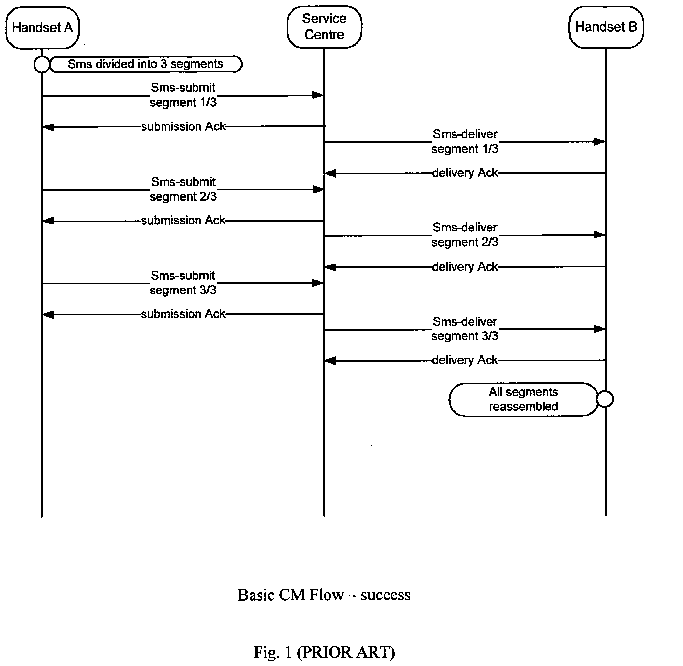

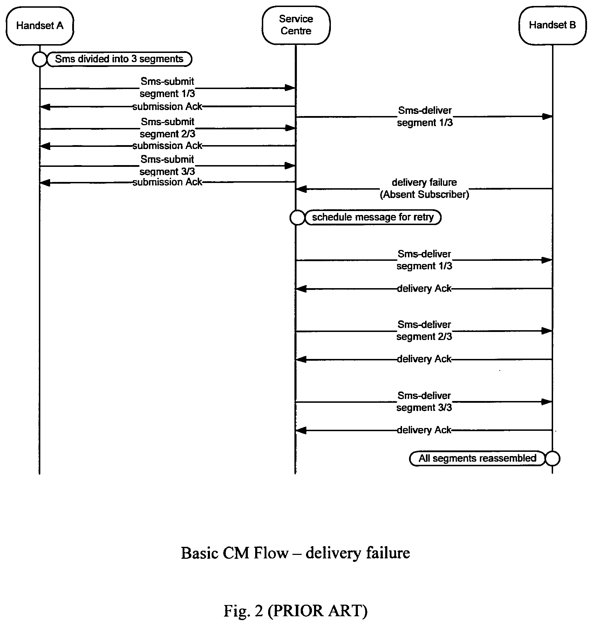

In a conventional mobile network the basic message flow of a CM is shown in Fig. 1 (success) and Fig. 2 (temporary delivery failure for first segment).

It should be noted that:
- for each segment, the submission leg and delivery leg are independent (as Service Centre takes care of store + forward),
- in the message submission leg, the submitting handset only starts sending a next segment once the acknowledgement of the Service Centre for the previous segment has been received, and
- in the message delivery leg, the Service Centre will only attempt a delivery for a next segment, once the previous segment is reported as successfully delivered.

The timing as depicted in this flow is one of many variations. In principle, the timing of the delivery flows from the service center to handset B is totally de-coupled from the timing of the submission flow by handset A, with as the only constraint that the delivery of a segment to handset B cannot start before the Service Center has received it from the handset A.

There are no constraints in standardization that all segments go to the same Service Centre. For example, if handset A is moving and the Service Centres are bound to a specific region, it can occur that segment 1 is submitted to Service Center 1 and Segment 2/3 to Service Center 2 due to the handset crossing a geographical boundary and reconnecting to Service Center 2.

Due to the acknowledged nature of the protocol, it is unlikely that SMS segments will be submitted out of sequence into the network. The handset will only send a next segment after the previous segment was acknowledged successfully.

In addition, delivery may not be directly possible. In such a case, it can occur that the delivery of the first segment already fails, and the Servcie Center uses its retry schedule to deliver to the B handset (note: this scenario also shows how the de-coupling of submission and delivery as the Handset A will continue submitting regardless of the delivery attempts of the Service Center).

Though in theory segments could arrive out of sequence, in practice this does not often occur. In practice, in any SMSC the messages are ordered by B-party number to ensure in-sequence delivery of messages and multi-level routing or dedicated service center addresses are used to ensure that submitted messages to the same B party from various locations in the network are always sent to the same SMSC, thus ensuring that in practice all segments will be delivered in sequence as they are sent from the same SMSC.

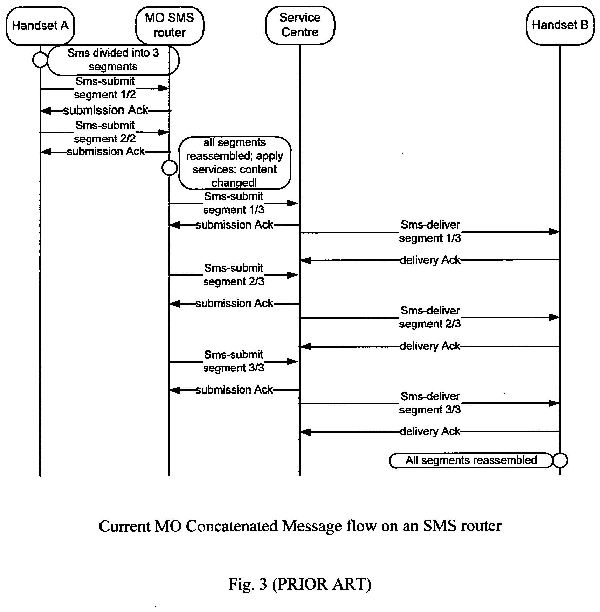

When an SMS router is put in the operator's network to control MO and MT message streams, the concatenated messages need to be stored before any service(s) can be applied to the full content of the message. This behavior is intrusive for the original message stream and causes billing problems for messages that require service(s). Fig. 3 is a depiction of the current functionality for MO concatenated messages that require service.

In the call flow diagram of Fig. 3 it is shown that all MO elements of the MO concatenated message are first being acknowledged (and stored) by the SMS router then the service is applied (i.e. archiving of the message), and then the original message is handed over towards the operators service centre for storage and MT delivery.

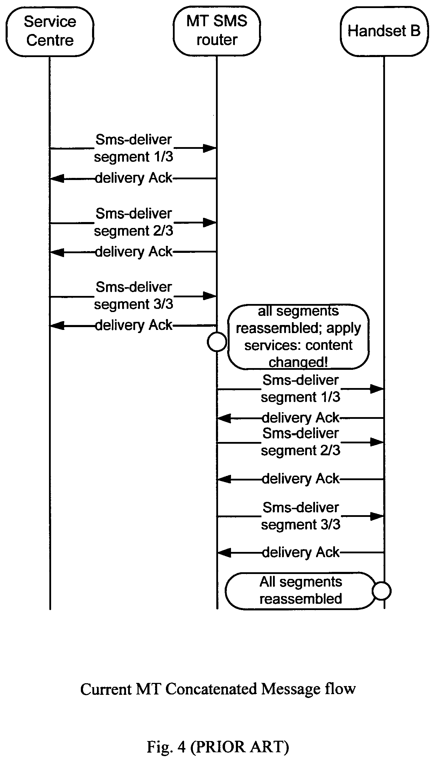

For MT Fig. 4 depict the current implementation. The MT flow is slightly more complicated: whereas in the MO flow the SMS router resides in the same network as the Service Center, in the MT flow often the SMS router is located in another network than the Service Center.

The invention addresses the problem of non-transparency in processing of concatenated messages.

### SUMMARY OF THE INVENTION

The invention is carried out accordingly to the appended claims.

### Detailed Description of the Invention

The invention will be more clearly understood from the following description of some embodiments thereof, given by way of example only with reference to the accompanying drawings in which:-
Figs. 1 to 4 are message flows of the prior art as outlined above;
Fig. 5 is a diagram illustrating architecture of an SMS router of the invention;
Fig. 6 is a sequence diagram for MO transparent-relay concatenated message flow;
Fig. 7 is a sequence diagram showing a flow with the introduction of an auto-signature;
Fig. 8 is a sequence diagram showing MO transparent-proxy concatenated message flow in another embodiment;
Fig. 9 shows MT transparent-proxy concatenated message flow; and
Fig. 10 shows desired MT transparent-relay concatenated message flow.

### Glossary of terms and their definitions:

| Acronym | Meaning | Explanation |
|---|---|---|
| MO | Mobile Originated | SMS message from a mobile to an SMSC |
| MT | Mobile Terminated | SMS messages from an SMSC to a mobile |
| CM | Concatenated Message | SMS messages consisting of multiple SMS |
| 3GPP | 3rd Generation Partnership Project | Standard for G3 network |
| TP-DA | TP-Destination Address | Destination Address in an 23.040 SMS PDU |
| TP-OA | TP-Originator Address | Originator Address in an 23.040 SMS PDU |
| TP-MR | TP-Message Reference | Message Reference number in an 23.040 SMS PDU |
| UD | User Data | The User Data (pay-load) of a 3GPP TS23.040 SMS message PDU. |
| UDH | User Data Header | First bytes of the user data field (Message Text Field) that provides information on for example segmentation and other information on the properties of the User Data |
| SMS router | | Component capable of handling the SMS protocol without the store & forward capability that is standardized as part of an Service Center. |
| Transparent-relay | | A transparency mode where the SMS router relays the MAP message using SCCP relaying to the Service Center/MSC and the response from the Service Center/MSC is returned directly towards the originator of the request bypassing the router. |
| Transparent-proxy | | A transparency mode where the SMS router emits a new MAP message to the Service Center/MSC, the response from the Service Center/MSC is returned towards the router and the router then returns the response to the original request to the originator. |

The invention achieves handling of the SMS messages transparently towards the network, while at the same time allowing services on the message as a whole.

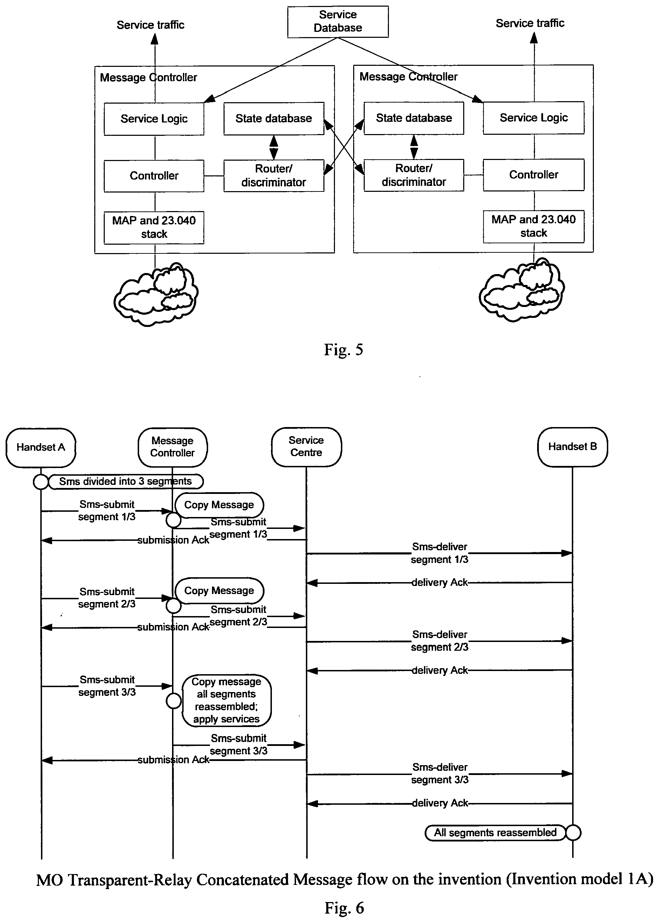

An SMS router of the invention has conventional hardware components, and additional functionality illustrated in Fig. 5, including:
- a state database, maintaining state of (single) and concatenated SMS messages being sent through the network,
- service logic, allowing for the application of services on single and concatenated SMS messages and with an interface for serviced traffic (e.g., message copies),
- a routing and discrimination engine, allowing for the selection of a specific state database in a distributed implementation of the invention,
- SMS interface, providing the 29.002 MAP interface and the 23.040 SMS encoding,
- a controller, responsible for the finite state machine/flow through the various components, and
- an (external) service database, indicating which services to apply to which subscriber.

In order to become less intrusive for the original message flow it is proposed with this invention to handle concatenated messages and apply their service(s) in the following way. The call flows discriminate on two different types of handling for MO (Scenario 1A & 1B) and MT (Scenario 2A & 2B) concatenated messages:
- Transparent-relay (see Glossary)
- Transparent-proxy (see Glossary)

### Use case of Invention 1A & 1B (Mobile Originated)

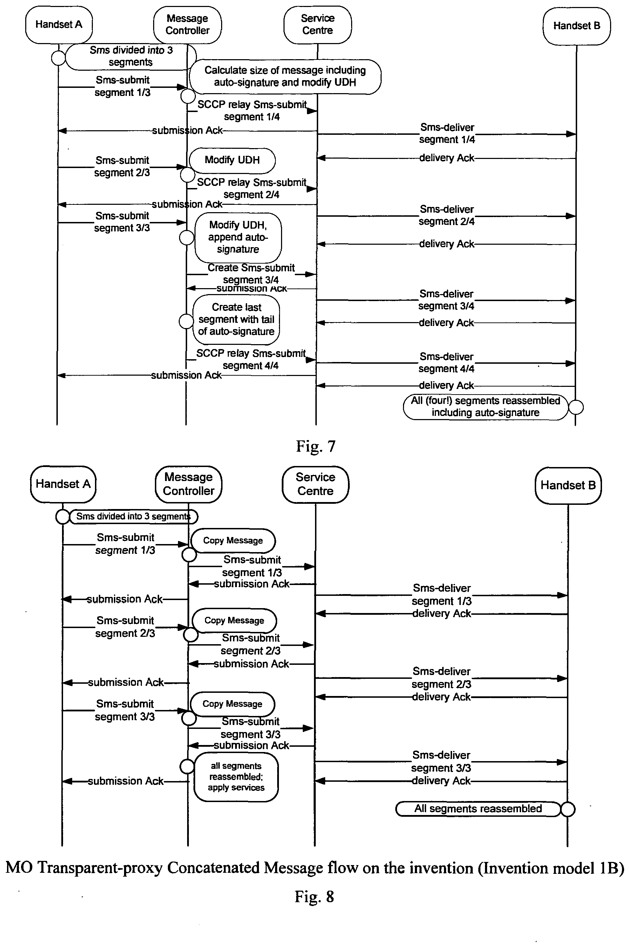

Fig. 6: MO Transparent-Relay Concatenated Message flow on the invention (Invention model 1A), Fig. 8 MO Transparent-proxy Concatenated Message flow on the invention (Invention model 1B) describe the desired implementation and handling for these two types (Transparent-relay and Transparent-proxy) of concatenated messages where service(s) needs to be applied in the MO leg of the SMS message (i.e. an archive service).
- The SMS router receives segment 1 of 3 (where the UDH indicates to the invention that this is a concatenated message). The router triggers to determine what service needs to be applied. The service database indicates that an archive service needs to be applied on the originator of the message. (Not depicted)
- The SMS router makes a copy of this segment message and places this in the state database. The state database is selected by the router/discriminator based on the TP-OA, TP-DA and the 'Concatenated short message reference number' (the first octet of the concatenation IEI field). This combination uniquely identifies a concatenated message from the Handset A (note TP-MR cannot be used as it is incremented for each segment).
- The router will now SCCP relay the original message to its original destination (Local SMSC). The response from this destination is directly routed towards the original originator of the message.
- The router receives segment 2 of 3. UDH indicates that this is a concatenated message and triggers the subscriber service database to understand what service(s) need to be applied. (Not depicted)
- The subscriber service database again indicates that an archive service needs to be applied and the invention will copy the message into the appropriate state database using the procedure described above. After that the original messages is directly handed over towards the original destination (Local SMSC). Note the second segment can arrive at the same SMS router instance or another SMS router instance, this is why the router/discriminator together with the distributed state database is of importance.
- The router receives segment 3 of 3. UDH indicates that this is a concatenated message and triggers the subscriber service database to understand what service(s) need to be applied. (Not depicted)
- The subscriber service database indicates that an archive service needs to be applied and the invention will copy the message into the appropriate state database using the procedure described above for reassembly. After that the original messages is directly handed over towards the original destination (Local SMSC)
- The router controller will see that all elements have arrived in the temporary message storage in the state database (Based on the UDH information) and will now start to reassemble the full message context. This can now be included in the service traffic interface towards an external system to apply the archive service.

This procedure will copy any attempt to submit a concatenated message by the handset regardless of whether the service center accepts it. In practice, this may not always be desirable for a copy service, and in that case the next flow may be more appropriate.

An alternative function for which the above flow can be used are modifications to the content of the MO message, for example, the introduction of an auto-signature into the message, the changing of the TP-OA to an alias. The changing of the TP-OA to an alias is trivial as it consists of changing an existing field only and does not result in changes to the segmentation.

Handling of error situations: if the SMSC does not respond with an accept of the message but with a temporary error, the handset A will retry the sending of each not accepted segment. The SMS router detects this as the combination of TP-OA, TP-DA and 'Concatenated short message reference number' is already present in the database, thus ensuring that a copy of any submission attempt is created only once.

As an example, the introduction of an auto-signature (which combines the generation of an additional message segment in proxy mode with the submission of the original segments in relay mode) is given in Fig. 7.

Referring to Fig. 7:
- The router receives segment 1 of 3 (where the UDH indicates to the invention that this is a concatenated message) the invention triggers the service database to determine what service needs to be applied. The service database indicates that an auto-signature service needs to be applied on the originator of the message.
- The router will now store the characteristics of the message in the state database and the auto-signature modification planned on the message (extending it with a number of characters). The state database in a specific instance (in the case of a distributed implementation) is selected by the router/discriminator based on the TP-OA, TP-DA and the 'Concatenated short message reference number' (the first octet of the concatenation IEI field). This combination uniquely identifies a concatenated message from the Handset A (note TP-MR cannot be used as it is incremented for each segment).
- The router will now modify the UDH in the message to indicate that an additional segment will be part of the message (i.e., segment 1 of 4) and SCCP relay the original message to its original destination (Local SMSC). The response from this destination is directly routed towards the original originator of the message. It is always necessary to reserve space for the additional segment as it is known at segment 1 what the total length of the message is (i.e., whether the last segment has sufficient room available for the auto-signature or not).
- The router receives segment 2 of 3. UDH indicates that this is a concatenated message. The controller uses the Router/Discriminator to check with the state database whether processing of this message is in progress.
- The state database indicates that processing is in progress, in this case an auto-signature is being applied. The controller will change the UDH of this message to indicate that it is segment 2 of 4 and SCCP relay the resulting PDU to the Service Center.
- The router receives segment 3 of 3. UDH indicates that this is a concatenated message. The controller uses the Router/Discriminator to check with the state database whether processing of this message is in progress.
- The state database indicates that processing is in progress, in this case an auto-signature is being applied. As this is the last segment, the controller will create a new segment containing the last of the contents concatenated with the start of the auto-signature that still fits in the segment, with as its segment indication segment 3 of 4. The controller emits a new PDU towards the Service Centre with this content and waits for the response of the Service Centre.
- If the acknowledge of the Service Centre is positive, the controller with change the contents of the previously received segment to indicate segment 4 of 4 and will add the tail of the auto-signature to the contents. It will then SCCP relay the resulting PDU to the Service Centre.
- The Service Centre acknowledges this final PDU to the handset.

As a result of this way of operating, the content of the message was successfully changed while minimizing the total number of SS7 PDUs needed through the use of SCCP relaying. Care must be taken that in the intermediate segment a TP-MR is used that is not used by the handset in the previous segments and that a request for a status report is switched off. This ensures that status reports are only generated for the segments for which the originating handset requested a status report and that the TP-MR still matches with the handset generated TP-MR thus uniquely identifying the SMS-SUBMIT.

Error situations are handled correctly as the state is retained for the validity period of the message, thus ensuring that if a segment is re-submitted the same modifications are applied to the segment again.

When operating in proxy mode, the response is known to the SMS router as well and it can act upon it. Proxy mode is also mandatory if the MAP versions between handset A and the message router of the invention and between the message router of the invention and Service Center are not the same.
- The router receives segment 1 of 3 (where the UDH indicates to the invention that this is a concatenated message) invention triggers to determine what service needs to be applied. The service database indicates that an archive service needs to be applied on the originator of the message. (Not depicted)
- The router will now make a copy of this segment and places this in the state database. The state database in a specific invention instance (in the case of a distributed implementation) is selected by the router/discriminator based on the TP-OA, TP-DA and the 'Concatenated short message reference number' (the first octet of the concatenation IEI field). This combination uniquely identifies a concatenated message from the Handset A (note TP-MR cannot be used as it is different for each segment).
- The router will now proxy the original message to its original destination (Local SMSC). The response from this destination is returned by the invention towards the original originator of the message.
- The router receives segment 2 of 3. UDH indicates that this is a concatenated message and triggers the subscriber service database to understand what service(s) need to be applied. (Not depicted)
- The subscriber service database again indicates that an archive service needs to be applied and the invention will copy the message into the appropriate state database using the procedure described above. After that the response is returned by the invention to the original originator. Note the second segment can arrive at the same invention instance or another invention instance, this is why the router/discriminator together with the distributed state database is of importance.
- The router receives segment 3 of 3. UDH indicates that this is a concatenated message and triggers the subscriber service database to understand what service(s) need to be applied. (Not depicted)
- The subscriber service database indicates that an archive service needs to be applied and the invention will copy the message into the appropriate state database using the procedure described above for reassembly. After that the original message is proxied over towards the original destination (Local SMSC) and the response of the SMSC is returned by the invention to the originating handset.
- The router controller will see that all elements have arrived in the temporary message storage in the state database (based on the UDH information) and will now start to reassemble the full message context. This can now be included in the service traffic interface towards an external system to apply the archive service.

The proxy case is especially of interest for archiving all messages that were accepted by the Service Centre instead of submitted by the handset, as in this case the invention has knowledge whether the Service Centre accepted the message.

### Use case of Invention 2A & 2B (Mobile Terminated)

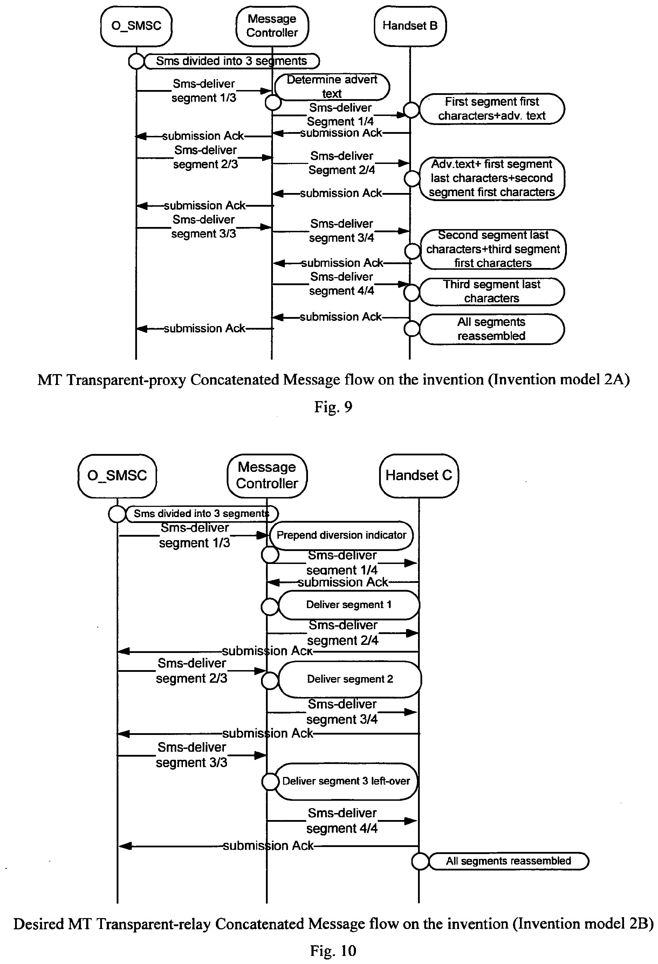

In the call flow diagrams Fig. 9: MT Transparent-proxy concatenated Message flow on the invention (Invention model 2A), Fig. 10: Desired MT Transparent-relay Concatenated Message flow on the invention (Invention model 2B) the desired implementation for handling concatenated MT messages where service(s) need to be applied is depicted and described in each figure.

An example is an MT-advertising service which inserts an additional text (before, after or in the middle of the message) when delivering to the B-handset (the flow shows somewhere in the middle of the first segment, but in principle it can be in any location).
- The router receives segment 1 of 3 (UDH indicates to the invention that this is a concatenated message) The invention consults the service database to determine what service needs to be applied. The service trigger response indicates that an advertising service needs to be applied on the recipient of the message. Based on this, it will reserve an entry in the state database for this message, store the advertisement text and the original message.
- The router will modify the original segment count to indicate the increased size to the receiving handset. The text of the segment is created (by appropriately mixing the advertisement text and the original text) and sent to the handset. If this is the extra segment, the response is used to send also determine whether to sent the original segment (with adapted text) as well. If not, it is directly returned as a negative response to the originating Service Centre which will go in retry mode.
- The router receives segment 2 of 3 from the service centre. UDH indicates that this is a concatenated message and looks up the state database to determine which service is pending.
- The state database indicates that that text modification is in progress and will use the text segment and advertisement text stored in the database to create the next text segment to be sent to the handset, including the increased segment count in the UDH. This segment is delivered to Handset B. The response of Handset B is returned to the Service Center.
- The router receives segment 3 of 3. UDH indicates that this is a concatenated message and looks up the state database to determine which service is pending. The state database indicates that that text modification is in progress and will use the text segment and advertisement text stored in the database to create the next text segment to be sent to the handset, including the increased segment count in the UDH. This segment is delivered to Handset B.
- As this is the 'extra' segment, the fact that it is sent out is stored in the state database. The original segment 3 of 3 is modified to 4 of 4 and the left-over text of segment 3 is inserted in it and delivered to the handset.
- The response of Handset B is returned to the Service Centre, finalizing this transfer.

Though in the flow, the advertisement segment is shown at the start of the message, in principle it can be inserted in any location in the message (at the front, in the middle, at the back). To allow for that, the state database stores the advertisement text, the character location at which the advertisement text needs to be inserted and the 'left-over' text of the original segment which was replaced by the advertisement text.

Additional segments can be generated in the middle of the message at the moment the advertisement text is being inserted, or only at the end as indicated in the MO flow.

By retaining this state, if the message cannot be delivered to the handset or the response towards the service centre is lost, in the case of a retry the same modification can be re-applied towards the same segment.

In case the advertisement was not applied yet, and a retry occurs after significant time, the advertisement text can be refreshed by only reserving the amount of data to be inserted at the initial segment and requesting the advertisement text only when it is really needed, ensuring that advertisements can be tailored to time of day and subscriber location.

### MT Transparent relay - diversion case

In this case, transparent relay is used for the delivery of the actual message segments. This ensures that the delivery reports (which are generated by the originating SMSC) are still correct, even though the concatenated message is diverted to another user and a text indicating the diversion (e.g., 'Divert from <B>:') is pre-pended to the actual message text.
- The router receives segment 1 of 3 (UDH indicates to the invention that this is a concatenated message). The invention looks up the service database to determine what service needs to be applied. The service database indicates that a diversion service needs to be applied on the recipient of the message from B to C. The SRI to determine whether the C handset is in coverage is not shown in the flow for clarity.
- The router will now create a new segment containing the diversion text, making use of the fact that the new segment does not have to be full but can contain only the necessary characters. The UDH is set to indicate that this is segment 1 of 4. The fact that this diversion is in progress is stored in the state database.
- The router delivers the segment to the handset and updates the state database to indicate it was delivered successfully.
- The router will now SCCP relay the original message to the MSC for delivery to its diverted destination handset C, updating the UDH to indicate segment 2 of 4. The response from this destination is directly relayed towards the original originator as it does not contain information identifying that the response came from C instead of from B.
- The router receives segment 2 of 3. UDH indicates that this is a concatenated message and triggers the state database to understand what service(s) is in progress.
- The state database indicates that a diversion service needs to be applied and that the extra segment and the initial segment were already delivered to the handset. The invention will modify the UDH to indicate 3 of 4 and SCCP relay the message to the MSC for delivery to handset C. The MSC returns the response directly to the originating SMSC.
- The router receives segment 3 of 3. UDH indicates that this is a concatenated message and triggers the state database to understand what service(s) is in progress.
- The state database indicates that a diversion service needs to be applied and that the extra segment and the initial segment were already delivered to the handset. The invention will modify the UDH to indicate 4 of 4 and SCCP relay the message to the MSC for delivery to handset C. The MSC returns the response directly to the originating SMSC.

In the diversion case, the insertion of the Diversion information in the SMS is not always this trivial:
- If a UDH is present containing more information, this UDH needs to be part of the first segment still and the diversion indicator appended. The second segment then is shortened to contain only the concatenation indicator in the UDH and the original segment text.
- If the UDH contains EMS formatting information, the offsets for the formatting need to be changed to take the additional inserted text into account.
- If the diversion indicator is not in the GSM7 character set but in UCS2 and the original SMS is in GSM7, a significantly larger number of delivery SMS messages needs to be generated. The original content is converted to UCS. An additional segment is first sent for delivery containing the initial text of the SMS and then the tail of the content in the segment is relayed using SCCP relaying. This ensures consistency of billing information and delivery reports with the actually delivered end user segments.

### Content control

In the content control case, the same procedure can be applied with an additional constraint that the messages must be in sequence. The procedure is described below:
- At the first segment, an additional segment is inserted in the maximum segment count. This segment is used to cater for partial matches of forbidden content.
- For each segment, the content is searched for 'trigger' keywords or phrases. Only partial matches can be made as a word may be 'broken' as part of the total content.
- No phrase match was found at all, the segment is passed as is.
- If a match was found, the appropriate content control action is taken (do not deliver, modify the text etc.).
- If a partial match was found at the end of a segment, the beginning of the segment (+ the final text of the previous segment if any) is sent out. The tail of the segment (the partial match) is stored in the state database.
- When the next segment arrives, the partial match and the contents of the new segment are search for violations.
- This procedure continues until all segments have been passed through the system.
By reserving the extra segment(s) it is possible to not send out potential matches at the end of the text. Instead, this text is retained until the next segment arrives and only then checked again when the full context is known. By this procedure, full content control is possible while still acting transparently.

### Out of sequence segments

Though in practice, all segments will be sent in sequence as they will come from the same originating SMSC and will be ordered by TP-MR or time stamp, this is a good practice across all operators that is not pre-scribed in the standard.

However, also in the case of non in-sequence messages it is still possible to provide part of the functionality. The main restriction in that case is that any modifications must be made to the head of the message, as only the first segment contains information on the nature of the pay-load of a message (the full UDH).

The procedure when dealing with out of sequence messages is as follows:
- When the first out-of-sequence segment is seen, an entry is allocated in the database and the service logic is checked to determine whether a service needs to be applied.
- The maximum number of segments added by this service is determined (dependent on the size of the text/forwarding information to be added to the SMS). This information is stored in the state database.
- The max sequence count and the sequence number of the SMS are increased by the number of additional segments to be inserted.
- Any subsequent segment which is not the first segment is treated in the same manner.
- When the first segment is received, the UDH is inspected. Dependent on the contents of the UDH (which text or binary SMS, which character set), the modifications are defined:
   - In case of a binary SMS, no modification is possible so the original segment is split over the still available segments which are sent out in sequence (the newly generated segments in proxy mode, the original in relay or proxy mode but returning the actual delivery result to the originating SMSC).
   - In case of a text SMS or EMS, taking the encoding into account a segment with the original UDH, but modified for the additional information is pre-pended (number of segments, in EMS also the character offsets for certain formatting). The new text is added after that in the appropriate character set encoding for as many segments as needed for the additional text.
   - The original first segment text contents (and optionally additional text) are sent out and the result of this delivery is used to return to the originating SMSC.

By using this procedure, all text and EMS messages can still be modified (or transparently passed through if the conclusion is that they cannot be modified anymore), even if messages are not delivered in sequence. The main restriction is that any modifications to the text must be in the same character encoding as the original SMS message.

The invention is not limited to the embodiments described but may be varied in construction and detail.

## Claims

1. A wireless message router comprising a message controller with service logic functions, wherein the message controller further comprises a state database, wherein the controller is adapted to: receive and process message segments, maintain in the state database state of single and concatenated messages, and to apply services to said messages;
wherein the controller is adapted to selectively operate in either a transparent-relay mode or a transparent-proxy mode to process a mobile originated, MO, concatenated message including at least two segments by performing the steps of:
receiving a first segment of the concatenated message, and determining what particular service needs to be applied,
copying the first segment into the state database,
forwarding the first segment to its original destination of a service centre network element or a switching centre network element, wherein a response from the original destination is routed to the originator of the first segment of the concatenated message,
receiving at least a second segment of the concatenated message, and determining (i) that this is a concatenated message, and (ii) what particular service needs to be applied,
copying the second segment into the state database,
forwarding the second segment to its original destination of a service centre network element or a switching centre network element,
checking that all segments of the concatenated message have arrived in a temporary message storage in the state database, and
reassembling the full message context for applying the particular service.

2. A message router as claimed in claim 1, wherein the relayed message is a MAP message or its equivalent; and wherein the relaying is performed using SCCP relaying.

3. A message router as claimed in any preceding claim,
wherein in the transparent-relay mode the controller is adapted to:
relay the original first segment to its original destination, and the response from the original destination is directly routed to the originator of the first segment of the concatenated message,
determine that the service which needs to be applied is an archive service, or modification of content of the original concatenated message, or adding of content to the concatenated message, and
relay the original second segment to its original destination and
wherein in the transparent-proxy mode the controller is adapted to:
receive the response from the original destination and forward the response to the originator of the first segment of the concatenated message.

4. A message router as claimed in any preceding claim, wherein the state database is selected based on the TP-OA, TP-DA and a concatenated short message reference number, which combination uniquely identifies a concatenated message from the originator device, wherein the controller is adapted to use a distributed state database to operate when the second segment arrives at the same SMS router instance or another SMS router instance, wherein the controller is adapted to modify the message header to indicate that an additional segment will be part of the message.

5. A message router as claimed in claims 3 or 4 wherein, upon receipt of the first segment, the controller is adapted to store characteristics of the message in the state database and the modification planned on the message, wherein for a last segment, the controller is adapted to create a new segment containing the last of the contents concatenated with the start of the modified content, and the controller is adapted to emit a new PDU towards the network element with this content and wait for the response of the network element, and wherein if the acknowledge of the network element is positive, the controller is adapted to change contents of a previously received segment to indicate that the current segment is the last and will add a tail of the auto-signature to the contents.

6. A message router as claimed in any preceding claim, further comprising a discriminator function to check with the state database whether processing of the message is in progress, and wherein the state database is adapted to indicates which service is in progress.

7. A message router as claimed in any preceding claim, wherein the controller is adapted to archive messages that were accepted by a service centre instead of submitted by a user device, based on knowledge as to whether the service centre accepted the message.

8. A message router as claimed in any of claims 1 to 7, wherein the controller is adapted to process a mobile terminated, MT, concatenated message including at least two segments by performing the steps of:
receiving a first segment of the concatenated message, and determining that a service which needs to be applied is addition of content for the recipient of the message,
reserving an entry in the state database for this message, storing the additional content and the original first segment of the message,
modifying the original segment count to indicate the increased size to the receiving user device, creating text of the increased segment by adding the additional content and the original first segment, and sending the increased to the user device,
receiving at least one subsequent segment of the concatenated message from the service centre and determining that a text modification is in progress and using the received at least one subsequent segment and the additional content stored in the database to create and send a next text segment to the user device, and
returning the response from the user device to the service centre.

9. A message router as claimed in claim 8, wherein the router is adapted to generate additional segments in the message when the additional content is being inserted, or only at the end; and wherein by retaining this state, if the message cannot be delivered to the user device or the response towards the service centre is lost, in the case of a retry the same modification can be re-applied towards the same segment.

10. A message router as claimed in any preceding claim, wherein the controller is adapted to deliver the message segments to ensure that delivery reports generated by the originating service centre are still correct, even though the concatenated message is diverted to another user device and content indicating the diversion is pre-pended to the message; and wherein if the service database indicates that a diversion service needs to be applied on the recipient of the message from B to C, the controller is adapted to create a new segment containing the diversion text, making use of the fact that the new segment does not have to be full but can contain only the necessary character, and the fact that this diversion is in progress is stored in the state database.

11. A message router as claimed in any preceding claim, wherein the controller is adapted to perform content control in which:
at a first received message segment, an additional segment is inserted in a maximum segment count and this segment is used to cater for partial matches of forbidden content,
for each segment, the content is searched for 'trigger' keywords or phrases and:
if no phrase match is found the segment is passed as it is,
if a match is found, the appropriate content control action is taken such as do not deliver, or modify the text,
if a partial match is found at the end of a segment, the beginning of the segment is sent out, and the tail of the segment is stored in the state database,
when the next segment arrives, the partial match and the contents of the new segment are searched for violations,
this procedure continues until all segments have been passed through the router, and by reserving any extra segment it is possible to not send out potential matches at the end of the text and instead, this text is retained until the next segment arrives and only then checked again when the full context is known.

12. A message router as claimed in any preceding claim, wherein the controller is adapted to handle out-of-sequence segments; and wherein the controller is adapted to add any modifications only to the head of the message, as only the first segment contains information on the nature of the pay-load of a message.

13. A method of operation of a wireless message router comprising a message controller with service logic functions, and a state database, wherein the controller selectively operates in at least one of a transparent-relay mode or a transparent-proxy mode by processing a mobile originated, MO, concatenated message including at least two segments by performing the steps of:
receiving a first segment of the concatenated message, and determining what particular service needs to be applied,
copying the first segment into the state database,
forwarding the first segment to its original destination of a service centre network element or a switching centre network element, wherein a response from the original destination is routed to the originator of the first segment of the concatenated message,
receiving at least a second segment of the concatenated message, and determining (i) that this is a concatenated message, and (ii) what particular service needs to be applied,
copying the second segment into the state database,
forwarding the second segment to its original destination of a service centre network element or a switching centre network element,
checking that all segments of the concatenated message have arrived in a temporary message storage in the state database, and
reassembling the full message context for applying the particular service.

14. A method as claimed in claim 13, wherein in the transparent-relay mode the controller performs the steps of:
relaying the original first segment to its original destination, and the response from the original destination is directly routed to the originator of the first segment of the concatenated message,
determining that the service which needs to be applied is an archive service, or modification of content of the original concatenated message, or adding of content to the concatenated message, and
relay the original second segment to its original destination and
wherein in the transparent-proxy mode the controller:
receives the response from the original destination and forward the response to the originator of the first segment of the concatenated message.

15. A method as claimed in any of claims 13 to 14, wherein the controller processes a mobile terminated, MT, concatenated message including at least two segments by performing the steps of:
receiving a first segment of the concatenated message, and determining that a service which needs to be applied is addition of content for the recipient of the message,
modifying the original segment count to indicate the increased size to the receiving user device, creating text of the increased segment by adding the additional content and the original first segment, and sending it the increased to the user device,
receiving at least one subsequent segment of the concatenated message from the service centre and determining that a text modification is in progress and using the received at least one subsequent segment and the additional content stored in the database to create and send a next text segment to the user device, and
returning the response from the user device to the service centre.

16. A computer program product comprising a computer usable medium having a computer readable program code embodied therein, said program code being adapted to be executed to perform the steps of a method of any of claims 13 to 15 when executed by a digital processor.

## Patentansprüche

1. Kabelloser Nachrichtenrouter, umfassend eine Nachrichtensteuerung mit Dienst-Logikfunktionen,
wobei die Nachrichtensteuerung ferner eine Zustandsdatenbank umfasst, wobei die Steuerung dafür ausgelegt ist: Nachrichtensegmente zu empfangen und zu verarbeiten, in der Zustandsdatenbank den Zustand einzelner und verketteter Nachrichten aufrechtzuerhalten und Dienste auf die Nachrichten anzuwenden;
wobei die Steuerung dafür ausgelegt ist, selektiv entweder in einem transparenten Vermittlungs(transparent Relay)-Modus oder in einem transparenten Proxy-Modus zu arbeiten, um eine verkettete MO (mobile originated)-Nachricht, die mindestens zwei Segmente enthält, zu bearbeiten, indem sie die folgenden Schritte ausführt:
Empfangen eines ersten Segments der verketteten Nachricht und Bestimmen, welcher bestimmte Dienst angewendet werden muss,
Kopieren des ersten Segments in die Zustandsdatenbank,
Weiterleiten des ersten Segments an dessen ursprünglichen Bestimmungsort eines Service-Center-Netzwerk-Elements oder eines Umschalt(Switching)-Center-Netzwerk-Elements, wobei eine Antwort von dem ursprünglichen Bestimmungsort zum Absender des ersten Segments der verketteten Nachricht gesendet wird,
Empfangen mindestens eines zweiten Segments der verketteten Nachricht und Bestimmen (i), dass es sich um eine verkettete Nachricht handelt und (ii) welcher bestimmte Dienst angewendet werden muss,
Kopieren des zweiten Segments in die Zustandsdatenbank,
Weiterleiten des zweiten Segments an dessen ursprünglichen Bestimmungsort eines Service-Center-Netzwerk-Elements oder eines Umschalt(Switching)-Center-Netzwerk-Elements,
Überprüfen, ob alle Segmente der verketteten Nachricht in einem Nachrichtenzwischenspeicher in der Zustandsdatenbank angekommen sind, und
Wiederzusammensetzen des vollständigen Nachrichtenkontextes zum Anwenden des bestimmten Dienstes.

2. Nachrichtenrouter nach Anspruch 1, wobei die weitergeleitete Nachricht eine MAP-Nachricht oder deren Äquivalent ist und wobei das Weiterleiten unter Verwendung von SCCP-Weiterleitung durchgeführt wird.

3. Nachrichtenrouter nach einem vorherigen Anspruch,
wobei im transparenten Relay-Modus die Steuerung dafür ausgelegt ist:
das ursprüngliche erste Segment an dessen ursprünglichen Bestimmungsort weiterzuleiten, und die Antwort von dem ursprünglichen Bestimmungsort direkt an den Absender des ersten Segments der verketteten Nachricht gesendet wird,
zu bestimmen, dass der Dienst, welcher angewendet werden muss, ein Archiv-Dienst oder eine Modifikation des Inhalts der ursprünglichen verketteten Nachricht oder das Hinzufügen von Inhalt zu der verketteten Nachricht ist, und
das ursprüngliche zweite Segment an dessen ursprünglichen Bestimmungsort weiterzuleiten, und
wobei im transparenten Proxy-Modus die Steuerung dafür ausgelegt ist:
die Antwort von dem ursprünglichen Bestimmungsort zu empfangen und die Antwort an den Absender des ersten Segments der verketteten Nachricht weiterzuleiten.

4. Nachrichtenrouter nach einem vorherigen Anspruch, wobei die Zustandsdatenbank auf der Basis der TP-OA, der TP-DA und einer verkettete-Kurznachricht-Referenznummer ausgewählt wird, wobei diese Kombination eine verkettete Nachricht von dem Absendergerät eindeutig identifiziert, wobei die Steuerung dafür ausgelegt ist, eine verteilte Zustandsdatenbank für ihre Arbeit zu verwenden, wenn das zweite Segment an der gleichen SMS-Router-Instanz oder einer anderen SMS-Router-Instanz eintrifft, wobei die Steuerung dafür ausgelegt ist, die Nachrichtenkopfzeile so zu modifizieren, dass darauf hingewiesen wird, dass ein zusätzliches Segment Teil dieser Nachricht sein wird.

5. Nachrichtenrouter nach den Ansprüchen 3 oder 4, wobei nach dem Empfangen des ersten Segments die Steuerung dafür ausgelegt ist, Charakteristika der Nachricht sowie die geplante Modifikation an der Nachricht in der Zustandsdatenbank zu speichern, wobei für ein letztes Segment die Steuerung dafür ausgelegt ist, ein neues Segment zu erzeugen, welches die letzten der Inhalte enthält, die mit dem Beginn des modifizierten Inhalts verkettet sind, und die Steuerung dafür ausgelegt ist, eine neue PDU an das Netzwerkelement mit diesem Inhalt abzusenden und auf die Antwort des Netzwerkelements zu warten, und wobei, falls die Bestätigung des Netzwerkelements positiv ausfällt, die Steuerung dafür ausgelegt ist, Inhalte eines zuvor empfangenem Segments zu verändern, um darauf hinzuweisen, dass das momentane Segment das letzte ist, und einen Fuß mit der Auto-Signatur an die Inhalte anhängt.

6. Nachrichtenrouter nach einem vorherigen Anspruch, der ferner eine Diskriminatorfunktion umfasst, um in der Zustandsdatenbank zu überprüfen, ob die Verarbeitung der Nachricht in Arbeit ist, und wobei die Zustandsdatenbank dafür ausgelegt ist, darauf hinzuweisen, welcher Dienst in Arbeit ist.

7. Nachrichtenrouter nach einem vorherigen Anspruch, wobei die Steuerung dafür ausgelegt ist, Nachrichten zu archivieren, die von einem Service-Center akzeptiert und nicht von einem Nutzergerät übermittelt wurden, und zwar auf der Basis der Kenntnis darüber, ob das Service-Center die Nachricht akzeptiert hat.

8. Nachrichtenrouter nach einem der Ansprüche 1 bis 7, wobei die Steuerung dafür ausgelegt ist eine verkettete MT(mobile terminated)-Nachricht, die mindestens zwei Segmente beinhaltet, zu verarbeiten,
indem sie die folgenden Schritte ausführt:
Empfangen eines ersten Segments der verketteten Nachricht und Bestimmen, dass es sich bei einem Dienst, der angewendet werden soll, um Hinzufügen von Inhalt für den Empfänger der Nachricht handelt,
Reservieren eines Eintrags in die Zustandsdatenbank für die Nachricht, Speichern des zusätzlichen Inhalts und des ursprünglichen ersten Segments der Nachricht,
Modifizieren des ursprünglichen Segmentzählers, um das empfangende Nutzergerät auf die Vergrößerung hinzuweisen, Erzeugen des Texts des vergrößerten Segments, indem der zusätzliche Inhalt und das ursprüngliche erste Segment hinzugefügt werden, und Senden des Vergrößerten an das Nutzergerät,
Empfangen mindestens eines anschließenden Segments der verketteten Nachricht von dem Service-Center und Bestimmen, dass eine Textmodifikation in Arbeit ist, und Verwenden des empfangenen mindestens einen anschließenden Segments und des in der Datenbank gespeicherten zusätzlichen Inhalts dazu, ein nächstes Textsegment zu erzeugen und an das Nutzergerät zu senden, und
Zurücksenden der Antwort von dem Nutzergerät an das Service-Center.

9. Nachrichtenrouter nach Anspruch 8, wobei der Router dafür ausgelegt ist, zusätzliche Segmente in der Nachricht, wenn der zusätzliche Inhalt eingefügt wird, oder nur am Ende zu erzeugen, und wobei durch das Beibehalten dieses Zustands, wenn die Nachricht nicht an das Nutzergerät zugestellt werden kann oder die Antwort zum Service-Center verloren geht, im Fall eines neuen Versuchs die gleiche Modifikation auf das gleichen Segment angewendet werden kann.

10. Nachrichtenrouter nach einem vorherigen Anspruch, wobei die Steuerung dafür ausgelegt ist, die Nachrichtensegmente zu übersenden, um sicherzustellen, dass Sendemeldungen, die durch das ursprüngliche Service Center generiert wurden, immer noch korrekt sind, auch wenn die verkettete Nachricht zu einem anderen Nutzergerät umgeleitet wird und Inhalt, der auf die Umleitung hinweist, der Nachricht vorangestellt ist; und wobei, falls die Service-Datenbank darauf hinweist, dass ein Umleitungsdienst auf den Empfänger der Nachricht von B nach C angewendet werden muss, die Steuerung dafür ausgelegt ist, ein neues Segment zu erzeugen, das den Umleitungstext enthält, wobei die Tatsache genutzt wird, dass das neue Segment nicht vollständig sein muss, sondern nur das nötige Zeichen enthalten kann, und die Tatsache, dass diese Umleitung in Arbeit ist, in der Zustandsdatenbank gespeichert wird.

11. Nachrichtenrouter nach einem vorherigen Anspruch, wobei die Steuerung dafür ausgelegt ist, Inhaltskontrolle durchzuführen, wobei:
bei einem ersten empfangenen Nachrichtensegment ein zusätzliches Segment innerhalb eines maximalen Segmentzählers eingefügt wird und dieses Segment dazu verwendet wird, Teiltreffer von verbotenem Inhalt aufzunehmen,
für jedes Segment der Inhalt auf "Trigger"-Schlüsselwörter oder -ausdrücke durchsucht wird und:
falls kein Ausdruckstreffer gefunden wird, das Segment so weitergegeben wird wie es ist,
falls ein Treffer gefunden wird, eine angemessene Inhaltskontrollaktion, wie nicht zuzustellen oder den Text zu modifizieren, ergriffen wird,
falls ein Teiltreffer am Ende eines Segments gefunden wird, der Anfang des Segments verschickt wird und der Fuß des Segments in der Zustandsdatenbank gespeichert wird,
wenn das nächste Segment eintrifft, der Teiltreffer und die Inhalte des neuen Segments auf Verstöße untersucht werden,
wobei diese Prozedur andauert, bis alle Segmente den Router durchlaufen worden sind, und es durch Reservieren eines zusätzlichen Segments möglich ist, potentielle Treffer am Ende des Texts nicht zu versenden, und stattdessen dieser Text zurückgehalten wird, bis das nächste Segment eintrifft, und nur dann wieder überprüft wird, wenn der gesamte Kontext bekannt ist.

12. Nachrichtenrouter nach einem vorherigen Anspruch, wobei die Steuerung dafür ausgelegt ist, nicht reihenfolgenkonforme Segmente zu bearbeiten, und wobei die Steuerung dafür ausgelegt ist, jegliche Modifikationen nur an die Kopfzeile der Nachricht anzufügen, da nur das erste Segment Informationen hinsichtlich die Art der Payload einer Nachricht enthält.

13. Verfahren für den Betrieb eines kabellosen Nachrichtenrouters, umfassend eine Nachrichtensteuerung mit Dienst-Logikfunktionen und eine Zustandsdatenbank, wobei
die Steuerung selektiv in mindestens einem aus einem transparenten Vermittlungs(transparent Relay)-Modus oder in einem transparenten Proxy-Modus arbeitet, indem sie eine verkettete MO (mobile originated)-Nachricht, die mindestens zwei Segmente enthält, bearbeitet, indem sie die folgenden Schritte ausführt:
Empfangen eines ersten Segments der verketteten Nachricht und Bestimmen, welcher bestimmte Dienst angewendet werden muss,
Kopieren des ersten Segments in die Zustandsdatenbank,
Weiterleiten des ersten Segments an dessen ursprünglichen Bestimmungsort eines Service-Center-Netzwerk-Elements oder eines Umschalt(Switching)-Center-Netzwerk-Elements, wobei eine Antwort von dem ursprünglichen Bestimmungsort zum Absender des ersten Segments der verketteten Nachricht gesendet wird,
Empfangen mindestens eines zweiten Segments der verketteten Nachricht und Bestimmen (i), dass es sich um eine verkettete Nachricht handelt und (ii) welcher bestimmte Dienst angewendet werden muss,
Kopieren des zweiten Segments in die Zustandsdatenbank,
Weiterleiten des zweiten Segments an dessen ursprünglichen Bestimmungsort eines Service-Center-Netzwerk-Elements oder eines Umschalt(Switching)-Center-Netzwerk-Elements,
Überprüfen, ob alle Segmente der verketteten Nachricht in einem temporären Nachrichtenspeicher in der Zustandsdatenbank angekommen sind, und
Wiederzusammensetzen des vollständigen Nachrichtenkontextes zum Anwenden des bestimmten Dienstes.

14. Verfahren nach Anspruch 13, wobei im transparenten Relay-Modus die Steuerung die folgenden Schritte durchführt:
Weiterleiten des ursprünglichen ersten Segments an dessen ursprünglichen Bestimmungsort, und die Antwort von dem ursprünglichen Bestimmungsort wird direkt an den Absender des ersten Segments der verketteten Nachricht gesendet,
Bestimmen, dass der Dienst, welcher angewendet werden muss, ein Archiv-Dienst oder eine Modifikation des Inhalts der ursprünglichen verketteten Nachricht oder das Hinzufügen von Inhalt zu der verketteten Nachricht ist, und
Weiterleiten des ursprünglichen zweiten Segments an dessen ursprünglichen Bestimmungsort, und
wobei im transparenten Proxy-Modus die Steuerung:
die Antwort von dem ursprünglichen Bestimmungsort empfängt und die Antwort an den Absender des ersten Segments der verketteten Nachricht weiterleitet.

15. Verfahren nach einem der Ansprüche 13 oder 14, wobei die Steuerung eine verkettete MT(mobile terminated)-Nachricht, die mindestens zwei Segmente enthält, verarbeitet, indem sie die folgenden Schritte durchführt:
Empfangen eines ersten Segments der verketteten Nachricht und Bestimmen, dass ein Dienst, der angewendet werden muss, das Hinzufügen von Inhalt für den Empfänger der Nachricht ist,
Modifizieren der ursprünglichen Segmentanzahl, um das empfangende Nutzergerät auf die Vergrößerung hinzuweisen, Erzeugen des Texts des vergrößerten Segments, indem der zusätzliche Inhalt und das ursprüngliche erste Segment angefügt werden, und Senden des Vergrößerten an das Nutzergerät,
Empfangen mindestens eines anschließenden Segments der verketteten Nachricht von dem Service-Center und Bestimmen, dass eine Textmodifikation in Arbeit ist, und Verwenden des empfangenen mindestens einen anschließenden Segments und des in der Datenbank gespeicherten zusätzlichen Inhalts dazu, ein nächstes Textsegment zu erzeugen und an das Nutzergerät zu senden, und
Zurücksenden der Antwort von dem Nutzergerät an das Service-Center.

16. Computerprogrammprodukt, umfassend ein von einem Computer nutzbares Medium, das einen darin enthaltenen Computer-lesbaren Programmcode aufweist, wobei dieser Programmcode dafür ausgelegt ist, ausgeführt zu werden, um die Schritte eines Verfahrens nach einem der Ansprüche 13 bis 15 auszuführen, wenn er von einem digitalen Prozessor ausgeführt wird.

## Revendications

1. Routeur de messages sans fil comprenant un contrôleur de messages doté de fonctions logiques de service,
dans lequel le contrôleur de messages comprend en outre une base de données d'états, dans lequel le contrôleur est conçu pour : recevoir et traiter des segments de message, conserver dans la base de données d'états l'état d'un message unique ou de messages concaténés, et appliquer des services sur lesdits messages ;
dans lequel le contrôleur est conçu pour fonctionner sélectivement dans soit un mode relais transparent ou un mode mandataire transparent pour traiter un message concaténé provenant d'un mobile (MO) comprenant au moins deux segments en exécutant les étapes consistant à :
recevoir un premier segment du message concaténé, et déterminer quel service particulier doit être appliqué,
copier le premier segment dans la base de données d'états,
transmettre le premier segment à sa destination initiale d'un élément de réseau de centre de service ou d'un élément de réseau de centre de commutation, dans lequel une réponse de la destination initiale est routée vers l'expéditeur du premier segment du message concaténé,
recevoir au moins un second segment du message concaténé, et déterminer (i) qu'il s'agit d'un message concaténé et (ii) quel service particulier doit être appliqué,
copier le second segment dans la base de données d'états,
transmettre le second segment à sa destination initiale d'un élément de réseau de centre de service ou d'un élément de réseau de centre de commutation,
vérifier que tous les segments du message concaténé sont arrivés dans un stockage temporaire de messages dans la base de données d'états, et
réassembler le contexte complet du message pour appliquer le service particulier.

2. Routeur de messages selon la revendication 1, dans lequel le message relayé est un message MAP ou son équivalent ; et dans lequel le relais est effectué en utilisant un relais SCCP.

3. Routeur de messages selon l'une quelconque des revendications précédentes,
dans lequel, dans le mode relais transparent, le contrôleur est conçu pour :
relayer le premier segment original à sa destination initiale, et la réponse de la destination initiale est directement routée à l'expéditeur du premier segment du message concaténé,
déterminer que le service qui doit être appliqué est un service d'archivage, ou une modification du contenu du message concaténé original, ou l'ajout de contenu au message concaténé, et
relayer le second segment original à sa destination initiale et
dans lequel, dans le mode mandataire transparent, le contrôleur est conçu pour :
recevoir la réponse de la destination initiale et transmettre la réponse à l'expéditeur du premier segment du message concaténé.

4. Routeur de messages selon l'une quelconque des revendications précédentes, dans lequel la base de données d'états est sélectionnée en fonction de la TP-OA, de la TPDA et d'un numéro de référence de message concaténé court, laquelle combinaison identifie uniquement un message concaténé du dispositif expéditeur, dans lequel le contrôleur est conçu pour utiliser une base de données d'états répartie pour fonctionner quand le second segment arrive à la même instance de routeur SMS ou une autre instance de routeur SMS, dans lequel le contrôleur est conçu pour modifier l'en-tête de message pour indiquer qu'un autre segment fera partie du message.

5. Routeur de messages selon les revendications 3 ou 4, dans lequel, lors de la réception du premier segment, le contrôleur est conçu pour stocker des caractéristiques du message dans la base de données d'états et la modification prévue sur le message, dans lequel, pour un dernier segment, le contrôleur est conçu pour créer un nouveau segment contenant la dernière partie du contenu concaténé avec le début du contenu modifié, et le contrôleur est conçu pour émettre une nouvelle PDU vers l'élément de réseau avec ce contenu et attendre la réponse de l'élément de réseau, et dans lequel, si l'accusé de réception de l'élément de réseau est positif, le contrôleur est conçu pour modifier le contenu d'un segment reçu antérieurement pour indiquer que le segment actuel est le dernier et ajoutera une queue de l'auto signature au contenu.

6. Routeur de messages selon l'une quelconque des revendications précédentes, comprenant en outre une fonction de discriminateur pour vérifier avec la base de données d'états si le traitement du message est en cours, et dans lequel la base de données d'états est conçue pour indiquer quel service est en cours.

7. Routeur de messages selon l'une quelconque des revendications précédentes, dans lequel le contrôleur est conçu pour archiver des messages qui ont été acceptés par un centre de service au lieu d'être soumis par un dispositif utilisateur, sur la base du fait de savoir que le centre de service a accepté le message.

8. Routeur de messages selon l'une quelconque des revendications 1 à 7, dans lequel le contrôleur est conçu pour traiter un message concaténé aboutissant à un mobile (TM) comprenant au moins deux segments
en exécutant les étapes consistant à :
recevoir un premier segment du message concaténé, et déterminer qu'un service qui doit être appliqué est un ajout de contenu pour le destinataire du message,
réserver une entrée dans la base de données d'états pour ce message, stocker le contenu supplémentaire et le premier segment original du message,
modifier le nombre de segments originaux pour indiquer la taille accrue au dispositif utilisateur récepteur, créant un texte du segment accru en ajoutant le contenu supplémentaire et le premier segment original, et envoyer le segment accru au dispositif utilisateur,
recevoir au moins un segment subséquent du message concaténé du centre de service, déterminer qu'une modification de texte est en cours et utiliser le au moins un segment subséquent reçu et le contenu supplémentaire stocké dans la base de données pour créer et envoyer un segment de texte suivant au dispositif utilisateur, et
retourner la réponse du dispositif utilisateur au centre de service.

9. Routeur de messages selon la revendication 8, dans lequel le routeur est conçu pour générer des segments supplémentaires dans le message au moment où le contenu supplémentaire est inséré, ou seulement à la fin ; et dans lequel, en retenant cet état, si le message ne peut pas être transmis au dispositif utilisateur ou la réponse vers le centre de service est perdue, dans le cas d'un nouvel essai, la même modification peut être appliquée de nouveau au même segment.

10. Routeur de messages selon l'une quelconque des revendications précédentes, dans lequel le contrôleur est conçu pour transmettre les segments de message pour s'assurer que les rapports d'acheminement générés par le centre de service d'origine sont encore exacts, même si le message concaténé est réacheminé vers un autre dispositif utilisateur et que le contenu indiquant le réacheminement est en suspens préalablement au message ; et dans lequel, si la base de données de services indique qu'un service de réacheminement doit être appliqué au destinataire du message de B à C, le contrôleur est conçu pour créer un nouveau segment contenant le texte de réacheminement, utilisant le fait que le nouveau segment n'a pas besoin à être complet, mais peut ne contenir que le caractère nécessaire, et le fait que ce réacheminement est en cours est stocké dans la base de données d'états.

11. Routeur de messages selon l'une quelconque des revendications précédentes, dans lequel le contrôleur est conçu pour exécuter un contrôle du contenu dans lequel :
à un premier segment de message reçu, un segment supplémentaire est inséré dans un nombre maximal de segments et ce segment est utilisé pour recevior des correspondances partielles du contenu interdit,
pour chaque segment, le contenu est recherché pour des mots-clés ou des expressions de « déclenchement » et :
si aucune correspondance d'expression n'est trouvée, le segment est transmis tel quel,
si une correspondance est trouvée, l'action de contrôle de contenu appropriée est prise, comme de ne pas transmettre ou de modifier le texte,
si une correspondance partielle est trouvée à la fin d'un segment, le début du segment est envoyé et la queue du segment est stockée dans la base de données d'états,
quand le segment suivant arrive, la correspondance partielle et le contenu du nouveau segment sont recherchés pour des infractions,
la procédure continue jusqu'à ce que tous les segments soient passés par le routeur, et en réservant tout segment supplémentaire, il est possible de ne pas envoyer de correspondances potentielles à la fin du texte et, au lieu, ce texte est retenu jusqu'à ce que le segment suivant arrive et seulement alors vérifié de nouveau quand le contexte complet est connu.

12. Routeur de messages selon l'une quelconque des revendications précédentes, dans lequel le contrôleur est conçu pour gérer des segments hors séquence ; et dans lequel le contrôleur est conçu pour ajouter des modifications seulement à la tête du message, car seul le premier segment contient de l'information sur la nature de la charge utile d'un message.

13. Procédé d'exploitation d'un routeur de messages sans fil comprenant un contrôleur de messages doté de fonctions logiques de service et une base de données d'états, dans lequel
le contrôleur fonctionne sélectivement dans au moins un d'un mode relais transparent ou d'un mode mandataire transparent en traitant un message concaténé provenant d'un mobile (MO) comprenant au moins deux segments en exécutant les étapes consistant à :
recevoir un premier segment du message concaténé, et déterminer quel service particulier doit être appliqué,
copier le premier segment dans la base de données d'états,
transmettre le premier segment à sa destination initiale d'un élément de réseau de centre de service ou d'un élément de réseau de centre de commutation, dans lequel une réponse de la destination initiale est routée vers l'expéditeur du premier segment du message concaténé,
recevoir au moins un second segment du message concaténé, et déterminer (i) qu'il s'agit d'un message concaténé et (ii) quel service particulier doit être appliqué,
copier le second segment dans la base de données d'états,
transmettre le second segment à sa destination initiale d'un élément de réseau de centre de service ou d'un élément de réseau de centre de commutation,
vérifier que tous les segments du message concaténé sont arrivés dans un stockage temporaire de messages dans la base de données d'états, et
réassembler le contexte complet du message pour appliquer le service particulier.

14. Procédé selon la revendication 13, dans lequel, dans le mode relais transparent, le contrôleur exécute les étapes consistant à :
relayer le premier segment original à sa destination initiale, et la réponse de la destination initiale est directement routée à l'expéditeur du premier segment du message concaténé,
déterminer que le service qui doit être appliqué est un service d'archivage, ou une modification du contenu du message concaténé original, ou l'ajout de contenu au message concaténé, et
relayer le second segment original à sa destination initiale et dans lequel, dans le mode mandataire transparent, le contrôleur :
reçoit la réponse de la destination initiale et transmet la réponse à l'expéditeur du premier segment du message concaténé.

15. Procédé selon l'une quelconque des revendications 13 à 14, dans lequel le contrôleur traite un message concaténé aboutissant à un mobile (TM) comprenant au moins deux segments en exécutant les étapes consistant à :
recevoir un premier segment du message concaténé, et déterminer qu'un service qui doit être appliqué est un ajout de contenu pour le destinataire du message,
modifier le nombre de segments originaux pour indiquer la taille accrue au dispositif utilisateur récepteur, créant un texte du segment accru en ajoutant le contenu supplémentaire et le premier segment original, et envoyer le segment accru au dispositif utilisateur,
recevoir au moins un segment subséquent du message concaténé du centre de service, déterminer qu'une modification de texte est en cours et utiliser le au moins un segment subséquent reçu et le contenu supplémentaire stocké dans la base de données pour créer et envoyer un segment de texte suivant au dispositif utilisateur, et
retourner la réponse du dispositif utilisateur au centre de service.

16. Programme informatique comprenant un support utilisable par ordinateur ayant un code de programme lisible par ordinateur intégré dans celui-ci, ledit code de programme étant conçu pour exécuter les étapes d'un procédé selon l'une quelconque des revendications 13 à 15 lors de l'exécution sur un processeur numérique.
